(19) Europäisches Patentamt
European Patent Office
Office européen des brevets

(11) **EP 4 661 093 A1**

(12) **EUROPEAN PATENT APPLICATION**

(43) Date of publication:
**10.12.2025 Bulletin 2025/50**

(21) Application number: **25171695.7**

(22) Date of filing: **22.04.2025**

(51) International Patent Classification (IPC):
*H01M 4/131* (2010.01)    *H01M 4/136* (2010.01)
*H01M 4/1391* (2010.01)    *H01M 4/1397* (2010.01)
*H01M 4/36* (2006.01)    *H01M 4/58* (2010.01)

(52) Cooperative Patent Classification (CPC):
**H01M 4/364; H01M 4/131; H01M 4/136;**
**H01M 4/1391; H01M 4/1397; H01M 4/366;**
**H01M 4/5825; H01M 10/052; H01M 2004/028**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **25.04.2024 KR 20240055136**

(71) Applicant: **SAMSUNG SDI CO., LTD.**
**Yongin-si, Gyeonggi-do 17084 (KR)**

(72) Inventors:
• **KIM, Young-Ki**
**Yongin-si (KR)**
• **KIM, Sangmi**
**Yongin-si (KR)**
• **CHOI, Aram**
**Yongin-si (KR)**
• **DOO, Sungwook**
**Yongin-si (KR)**
• **KANG, Gwiwoon**
**Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, METHOD FOR PREPARING THE SAME, AND RECHARGEABLE LITHIUM BATTERY INCLUDING THE SAME**

(57) A positive electrode active material for a rechargeable lithium battery, a method for preparing the positive electrode active material, and a rechargeable lithium battery including the positive electrode active material are provided. The positive electrode active material includes first particles including a compound of $Li_{a1}Mn_{z1}Fe_{x1}Ti_{y1}B^1{}_{b1}PO_{4-c1}$ and having a first average particle diameter, and second particles including a compound of $Li_{a2}Ni_{z2}Mn_{x2}C^1{}_{y2}O_{c2}$ and having a second average particle diameter. The amount of the first particles is about 80 wt% to about 97.5 wt% on the basis of 100 wt% of a sum of the amount of the first particles and the amount of the second particles.

FIG. 6

EP 4 661 093 A1

**Description**

**BACKGROUND**

**1. Field**

One or more embodiments of the present disclosure relate to a positive electrode active material for a rechargeable lithium battery, a method for preparing the positive electrode active material, and a rechargeable lithium battery including the positive electrode active material, for example, relate to a positive electrode active material including an olivine-based lithium compound, a method for preparing such a positive electrode active material, and a rechargeable lithium battery including such a positive electrode active material.

**2. Description of the Related Art**

Recently, with the rapid spread and popularization of electronic devices that use batteries (such as mobile phones and/or laptop computers), and/or electric vehicles, the demand for rechargeable batteries with relatively high energy density and high capacity has been rapidly increasing. Accordingly, research and development to improve the performance of such rechargeable batteries, such as rechargeable lithium batteries, is being actively and intensively conducted.

A rechargeable lithium battery is a battery including a positive electrode and a negative electrode, each of which contains an active material capable of intercalation and deintercalation of lithium ions, and an electrolyte. Electrical energy is generated through the oxidation and reduction reactions when lithium ions are intercalated into and deintercalated from the positive electrode and negative electrode. For example, the electrical energy is generated when lithium ions are intercalated into the positive electrode and/or deintercalated from the negative electrode during the discharge process.

**SUMMARY**

One or more aspects of embodiments of the present disclosure are directed toward a positive electrode active material that has a high energy density, a high operating voltage, and a high conductivity.

One or more aspects of embodiments of the present disclosure are directed toward a rechargeable lithium battery that has a high energy density, a high operating voltage, and enhanced high low-temperature properties, by including the positive electrode active material.

Additional aspects will be set forth in part in the description which follows and, in part, will be apparent from the description, or may be learned by practice of the presented embodiments of the disclosure.

According to one or more embodiments of the present disclosure, a positive electrode active material includes first particles including a compound of Chemical Formula 1 and having a first average particle diameter, and second particles including a compound of Chemical Formula 2 and having a second average particle diameter, wherein a content (e.g., amount) of the first particles is about 80 wt% to about 97.5 wt% on the basis of 100 wt% of a sum of the content (e.g., amount) of the first particles and a content (e.g., amount) of the second particles.

Chemical Formula 1 $\quad Li_{a1}Mn_{z1}Fe_{x1}Ti_{y1}B^1_{b1}PO_{4-c1}$

In Chemical Formula 1, $0.8 \leq a1 \leq 1.2$, $0.3 \leq z1 \leq 0.7$ (or $0.3 \leq z1 < 0.7$), $0.3 \leq x1 \leq 0.7$ (or $0.3 \leq x1 < 0.7$), $0.001 \leq y1 \leq 0.05$, $0 \leq b1 \leq 0.05$, $0 \leq c1 \leq 0.05$, and $x1 + y1 + z1 + b1 = 1$ may be satisfied.

Chemical Formula 2 $\quad Li_{a2}Ni_{z2}Mn_{x2}C^1_{y2}O_{c2}$

In Chemical Formula 2, $1 \leq a2 \leq 1.5$, $0.3 \leq z2 \leq 0.7$ (or $0.3 \leq z2 < 0.7$), $0.3 \leq x2 \leq 0.7$ (or $0.3 \leq x2 < 0.7$), $0.001 \leq y2 \leq 0.1$ (or $0 \leq y2 \leq 0.1$), $2 \leq c2 \leq 2.3$, and $z2 + x2 + y2 = 1$ may be satisfied.

Each of $B^1$ in Chemical Formula 1 and $C^1$ in Chemical Formula 2 may independently include (e.g., be) at least one element selected from the group consisting of transition metals having an oxidation number of 3 or 4, and, in one or more embodiments, the transition metal having an oxidation number of 3 or 4 may be selected from among Ti, Mn, V, Zr, Nb, Mo, Nd, or other suitable transition metals.

According to one or more embodiments of the present disclosure, a method for preparing a positive electrode active material includes preparing first particles having a first average particle diameter, preparing second particles having a second average particle diameter, and mixing the first particles and the second particles so that a content (e.g., amount) of the first particles is about 80 wt% to about 97.5 wt% on the basis of 100 wt% of a sum of the content (e.g., amount) of the first particles and a content (e.g., amount) of the second particles. The preparing of the first particles may include adding a manganese iron phosphate precursor, a lithium source, a carbon source, and a dopant source to a solvent and mixing to form a first mixture, drying the first mixture by spray drying, and baking the dried first mixture. The preparing of the second particles may include mixing a transition metal precursor and a lithium source to form a second mixture, drying the second mixture by spray drying, and baking the dried second mixture.

According to one or more embodiments of the present disclosure, a rechargeable lithium battery may include the positive electrode active material.

At least some of the above and other features of the invention are set out in the claims.

## BRIEF DESCRIPTION OF DRAWINGS

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.

FIG. 1 illustrates a simplified conceptual diagram showing a rechargeable lithium battery according to one or more embodiments of the present disclosure.

FIGS. 2 - 5 each illustrate a simplified diagram showing a rechargeable lithium battery according to one or more embodiments of the present disclosure, where FIG. 2 illustrates a cylindrical battery, FIG. 3 illustrates a prismatic battery, and FIGS. 4 and 5 each illustrates a pouch-type (kind) battery.

FIG. 6 illustrates an enlarged view showing a positive electrode active material layer of a rechargeable lithium battery according to one or more embodiments of the present disclosure.

FIG. 7 is a flowchart for explaining a method for preparing a positive electrode active material according to one or more embodiments of the present disclosure.

FIG. 8A illustrates scanning electron microscope (SEM) images of a positive electrode active material of Preparation Example 1 of the present disclosure.

FIG. 8B illustrates scanning electron microscope (SEM) images of a positive electrode active material of Preparation Example 2 of the present disclosure.

## DETAILED DESCRIPTION

In order to sufficiently understand the configurations and effects of the present disclosure, one or more embodiments of the disclosure will be described with reference to the accompanying drawings. It should be noted, however, that the disclosure is not limited to the following example embodiments, and may be implemented in one or more suitable forms. Rather, the example embodiments are provided only to illustrate the present disclosure and let those skilled in the art fully know the scope of the disclosure.

In this disclosure, it will be understood that, if (e.g., when) an element is referred to as being on another element, the element may be directly on the other element or one or more intervening elements may be present therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the present disclosure, and duplicative descriptions thereof may not be provided for conciseness.

Unless otherwise specially noted in this disclosure, the singular forms "a," "an," and "the" are intended to include the plural forms as well, unless the context clearly indicates otherwise. Further, the utilization of "may" when describing embodiments of the present disclosure refers to "one or more embodiments of the present disclosure". In addition, unless otherwise specially noted, the phrase "A or B" or "A and/or B" or "A/B" may indicate "A but not B," "B but not A," and "A and B." The terms "comprise(s)/include(s)/have(has)" and/or "comprising/including/having" used in this disclosure do not exclude the presence or addition of one or more other components.

As used herein, the term "combination thereof" may refer to a mixture, a stack, a composite, a copolymer, an alloy, a blend, or a reaction product of the constituents.

Unless otherwise specially defined in this disclosure, a particle diameter/size may be an average particle diameter/size. Also, a particle diameter/size may refer to an average particle diameter/size (D50), which refers to the diameter/size of particles at a cumulative volume of about 50 vol% in a particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. Further, D90 refers to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size. D10 refers to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size. The average particle diameter/size (D50) may be measured by a method widely suitable (known) to those skilled in the art, for example, by a particle size analyzer, for example, HORIBA, LA-950 laser particle size analyzer, or by using a transmission electron microscope (TEM) image or a scanning electron microscope (SEM) image. In one or more embodiments, the average particle diameter/size may be measured by a measurement device using dynamic light-scattering, wherein data analysis is conducted to count the number of particles for each particle size range, and an average particle diameter/size (D50) value may then be obtained through calculation. Also, a laser scattering method may be utilized to measure the average particle diameter/size. In the laser scattering method, target particles are dispersed in a dispersion medium, then, introduced into a commercial laser diffraction particle-diameter measurement instrument (e.g., MT3000 of Microtrac), and irradiated to ultrasonic waves of about 28 kHz at an output of about 60 W, and the average particle diameter/size (D50) based on about 50% of particle diameter distribution may be calculated in the measurement instrument. In the present disclosure, when particles are spherical, "diameter/size" indicates an average particle diameter/size, and when the particles are non-spherical, the "diameter/size" indicates an average major axis length of particles.

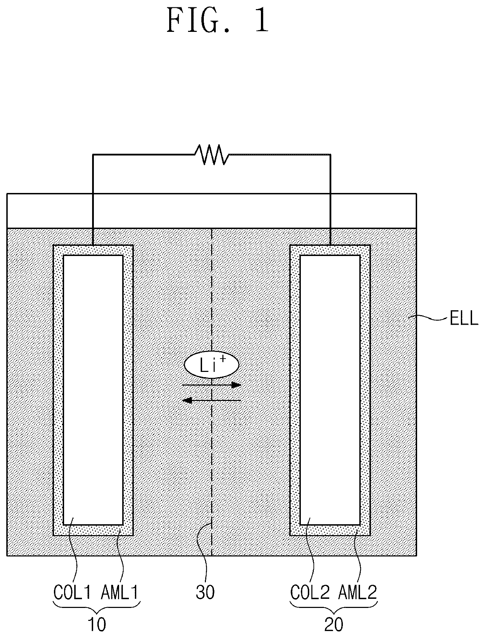

FIG. 1 illustrates a simplified conceptual diagram of a rechargeable lithium battery according to one or more embodiments of the present disclosure. Referring to FIG. 1, a rechargeable lithium battery may include a positive electrode 10, a negative electrode 20, a separator 30, and an electrolyte (e.g., an electrolyte solution) ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20, and the separator 30 may be in contact with the electrolyte solution ELL. For example, the positive electrode 10, the negative electrode 20, and the separator 30 may be immersed in (e.g., impregnated with) the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

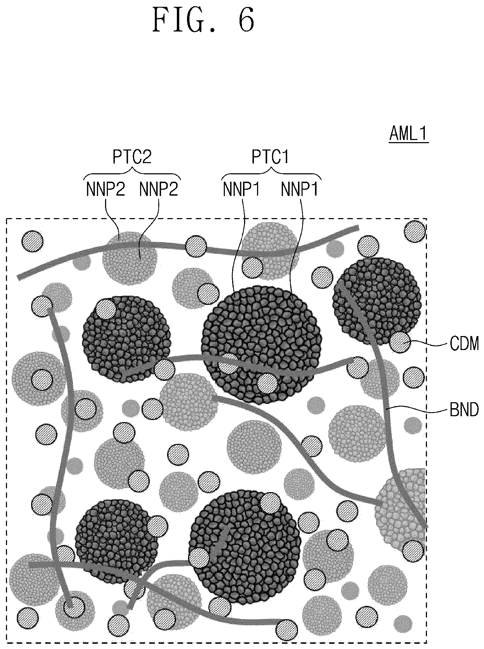

The positive electrode 10 for a rechargeable lithium battery may include a current collector COL1 and a positive electrode active material layer AML1 on the current collector COL1. The positive electrode active material layer AML1 may include a positive electrode active material (e.g., in a form of particles) and may further include a binder and/or a conductive material (e.g., an electron conductor). Detailed description on the positive electrode active material layer AML1 according to one or more embodiments of the disclosure will be explained later with reference to FIG. 6. In one or mor embodiments, aluminium (Al) may be used as the current collector COL1, but embodiments of the present disclosure are not limited thereto.

**Negative Electrode 20**

The negative electrode 20 for a rechargeable lithium battery may include a current collector COL2, and a negative electrode active material layer AML2 on the current collector COL2. The negative electrode active material layer AML2 may include a negative electrode active material (e.g., in a form of particles) and may further include a binder and/or a conductive material (e.g., an electron conductor).

For example, in one or more embodiments, the negative electrode active material layer AML2 may include about 90 wt% to about 99 wt% of the negative electrode active material, about 0.5 wt% to about 5 wt% of the binder, and about 0 wt% to about 5 wt% of the conductive material, based on 100 wt% of a total weight of the negative electrode active material layer.

The binder may serve to attach the negative electrode active material particles well to each other and also to attach the negative electrode active material well to the current collector COL2. The binder may include a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the binder of the negative electrode, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include sodium (Na), potassium (K), or lithium (Li).

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electron conductor) may be used to impart conductivity to the electrode. Any material that does not cause chemical change and is an electron conductive material may be used in the battery. Non-limiting examples of the conductive material may include: a carbon-based material such as natural graphite, artificial graphite, carbon black, acetylene black, Ketjen black, a carbon fiber, a carbon nanofiber, and/or carbon nanotubes; a metal-based material including copper, nickel, aluminium, silver, and/or the like, in a form of a metal powder or a metal fiber; a conductive polymer such as a polyphenylene derivative; and/or a (e.g., any suitable) mixture thereof.

The current collector COL2 may use a copper foil, a nickel foil, a stainless steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that reversibly intercalates/deintercalates lithium ions, a lithium metal, a lithium metal alloy, a material capable of doping and de-doping lithium, or a transition metal oxide.

The material that reversibly intercalates/deintercalates lithium ions may include a carbon-based negative electrode active material, for example, crystalline carbon, amorphous carbon and/or a (e.g., any suitable) combination thereof. The crystalline carbon may be graphite such as non-shaped (e.g., irregularly shaped), sheet-shaped, flake-shaped, sphere-shaped, or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping and de-doping lithium may be a Si-based negative electrode active material or a Sn-based negative electrode active material. The Si-based negative electrode active material may include silicon, a silicon-carbon composite, $SiO_x$ ($0 \leq x \leq 2$), a Si-Q alloy (where Q is selected from among an alkali metal, an alkaline earth metal, a Group 13 element, a Group 14 element (except for Si), a Group 15 element, a Group 16 element, a transition metal, a rare-earth element, and/or a (e.g., any suitable) combination thereof), and/or a (e.g., any suitable) combination thereof. The Sn-based negative electrode active material may include Sn, $SnO_k$ ($0<k\leq2$) (e.g., $SnO_2$), a Sn-based alloy, and/or a (e.g., any suitable) combination thereof.

The silicon-carbon composite (e.g., in a form of particles) may be a composite of silicon and amorphous carbon. According to one or more embodiments, the silicon-carbon composite may be in a form of silicon particles and amorphous carbon coated on the surface of each of the silicon particles. For example, in one or more embodiments, the silicon-carbon composite may include a secondary particle (core), in which primary silicon particles are assembled, and an amorphous carbon coating layer (shell) on the surface of the secondary particle. The amorphous carbon may also be between the primary silicon particles, and, for example, the primary silicon particles may each be coated with the amorphous carbon. The secondary particle may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon first coating layer on a surface of the core.

In one or more embodiments, the Si-based negative electrode active material and/or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, for example, a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one surface or both surfaces (e.g., two opposite surfaces)) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but embodiments of the present disclosure are not limited thereto.

In one or more embodiments, the organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in an electrochemical reaction of the battery.

The non-aqueous organic solvent may be a carbonate-based solvent, an ester-based solvent, an ether-based solvent, a ketone-based solvent, an alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, and/or an ether bond), and/or the like; amides such as dimethylformamide; dioxolanes such as 1,3-dioxolane, 1,4-dioxolane, and/or the like; sulfolanes; and/or the like.

The non-aqueous organic solvents may be used alone or in combination of two or more.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a rechargeable lithium battery, enables a basic operation of the rechargeable lithium battery, and improves transportation and migration of the lithium ions between the positive electrode and the negative electrodes. The lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalate)borate (LiDFOB), lithium difluorobis(oxalato)phosphate (LiDFBOP), and lithium bis(oxalato)borate (LiBOB).

**Rechargeable Lithium Battery**

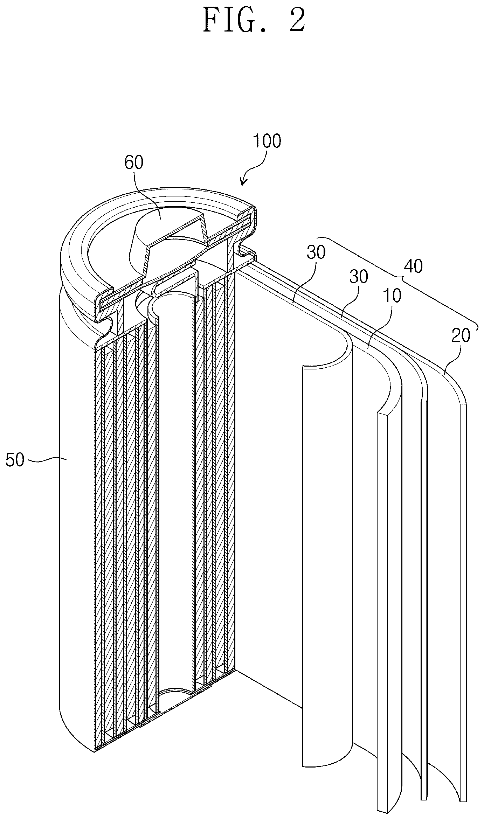

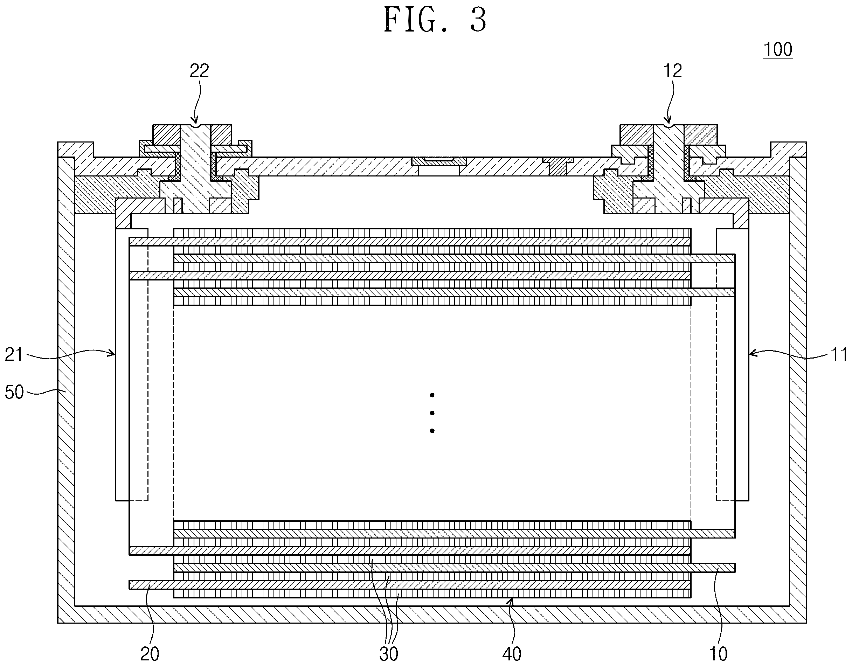

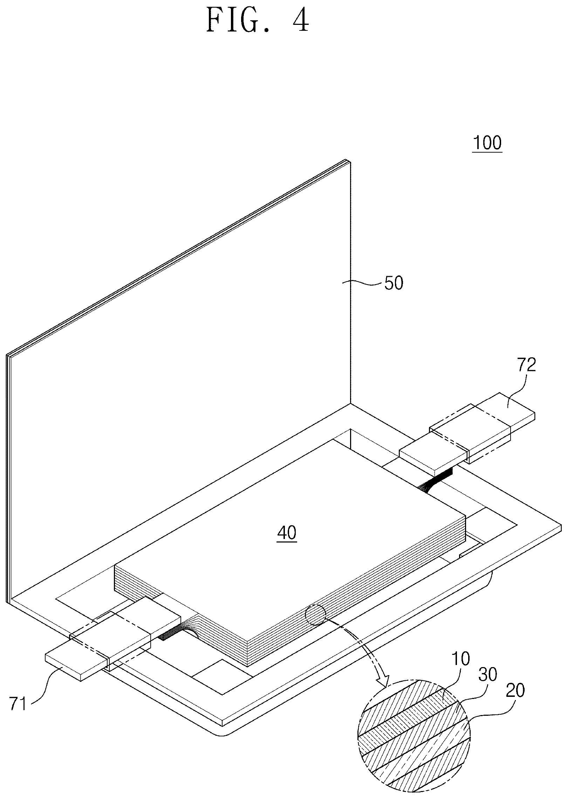

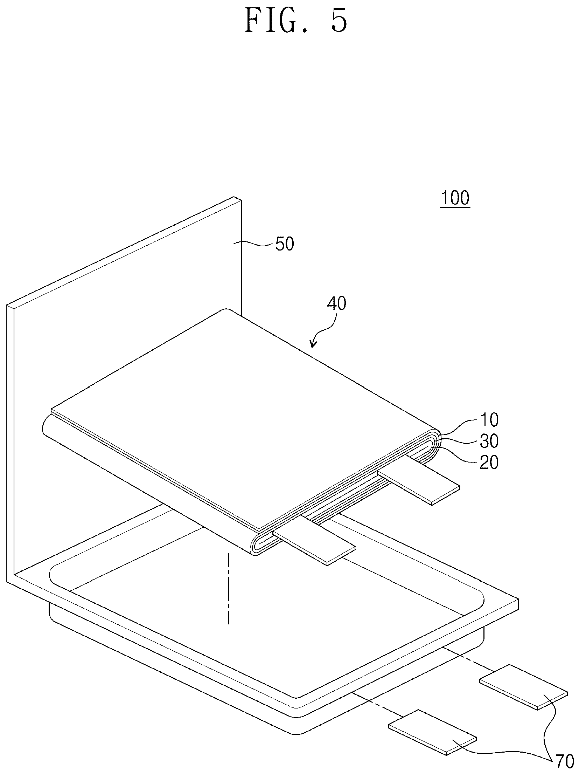

The rechargeable lithium battery may be classified into cylindrical, prismatic, pouch, or coin-type (kind) batteries, and/or the like depending on their shape. FIGS. 2 to 5 are each a schematic view illustrating a rechargeable lithium battery according to one or more embodiments of the present disclosure. FIG. 2 shows a cylindrical battery, FIG. 3 shows a prismatic battery, and FIGS. 4 and 5 each show a pouch-type (kind) battery. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In some embodiments, the rechargeable lithium battery 100 may include a sealing member 60 sealing the case 50, as shown in FIG. 2. In some embodiments, as shown in FIG. 3, the rechargeable lithium battery 100 may include a positive lead tab 11, a positive terminal 12, a negative lead tab 21, and a negative terminal 22. In some embodiments, as shown in FIGS. 4 and 5, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6 illustrates an enlarged view showing a positive electrode active material layer of a rechargeable lithium battery according to one or more embodiments of the present disclosure. Referring to FIG. 6, as discussed above, the positive electrode active material layer AML1 (see FIG. 1) may include a first particle PTC1, a second particle PTC2, a conductive material CDM (e.g., electron conductor), and a binder BND. A plurality of the first particles PTC1 and a plurality of the second particles PTC2 constitute a positive electrode active material according to one or more embodiments of the present disclosure.

In one or more embodiments, the positive electrode active material layer AML1 may further include an additive that may serve as a sacrificial positive electrode.

In one or more embodiments, a content (e.g., amount) of the positive electrode active material (PTC1 and PTC2) in the positive electrode active material layer AML1 may range from about 90 wt% to about 99.5 wt% relative to 100 wt% of a total weight of the positive electrode active material layer AML1. Each of the contents of the binder BND and the conductive material CDM may be about 0.5 wt% to about 5 wt% relative to 100 wt% of the total weight of the positive electrode active material layer AML1.

The binder BND may combine the first particles PTC1, the second particles PTC2, and the conductive material CDM with each other. For example, the binder BND may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material CDM may be used to improve conductivity (e.g., electrical conductivity) of the positive electrode active material layer AML1. Any conductive material that does not cause a chemical change of the positive electrode active material layer AML1 may be used without limitation as the conductive material CDM. For example, the conductive material CDM may include: a carbon-based material such as natural graphite, artificial graphite, carbon black, acetylene black, Ketjen black, a carbon fiber, a carbon nano-fiber, and/or carbon nano-tubes; a metal-based material containing copper, nickel, aluminium, silver and/or the like and having a metal powder or metal fiber form (e.g., in a form of metal powder or metal fibers); a conductive polymer such as a polyphenylene derivative; and/or a (e.g., any suitable) mixture thereof.

Hereinafter, each of the first particle PTC1 and the second particle PTC2 will be explained in more detail.

**First Particle PTC1**

The first particle PTC1 may have (e.g., be in) a polycrystal form and may include a secondary particle (e.g., be in secondary particle form) in which at least two or more first primary particles NNP1 are agglomerated. For example, one first particle PTC1 may include a plurality of first primary particles NNP1 agglomerated with each other. The first particle PTC1 may have a spherical shape or an elliptical shape.

In one or more embodiments, the first particle PTC1 may include a coating layer on the surface thereof. The coating layer may cover the entire surface (e.g., entire outermost surface) of the first particle PTC1 or may cover a portion of the surface of the first particle PTC1. For example, the coating layer may include carbon and/or a carbon-containing compound. The first particle PTC1 may have improved structural stability and electrical conductivity due to the coating layer.

In one or more embodiments, the coating layer may further include at least one (e.g., at least one metal-containing compound) selected from the group consisting of a titanium-containing compound, a magnesium-containing compound, and a vanadium-containing compound. The metal-containing compound such as the titanium-containing compound, the magnesium-containing compound, and the vanadium-containing compound may be, for example, a metal oxide, a metal hydroxide, a metal carbonate, a synthesized compound thereof, or a (e.g., any suitable) mixture thereof. The metal-containing compound may further include other metal or non-metal elements. For example, in one or more embodiments, the metal-containing compound may further include lithium.

In one or more embodiments, the first particle PTC1 may further include a grain boundary coating layer on the surface of each of the first primary particles NNP1. The grain boundary coating layer may be present in the first particle PTC1. The grain boundary coating layer may be formed along the interface between the first primary particles NNP1 inside the first particle PTC1. For example, the grain boundary coating layer may refer to a material coated on a grain boundary in the first particle PTC1. The grain boundary coating layer may include carbon and/or a carbon-containing compound. The grain boundary coating layer may further include at least one selected from the group consisting of a titanium-containing compound, a magnesium-containing compound, and a vanadium-containing compound.

An interior of the above-described first particle PTC1 may refer to the entire interior of the first particle PTC1 excluding the surface (e.g., outermost surface) of the first particle PTC1. For example, the interior of the first particle PTC1 may refer to an entire interior from a depth of about 10 nm from the surface (e.g., outermost surface) of the first particle PTC1 to a center of the first particle PTC1, or a region from a depth of about 10 nm from the surface of the first particle PTC1 to a depth of about 2 $\mu$m from the surface of the first particle PTC1. For example, in one or more embodiments, this interior region may extend from a depth of about 10 nm below the surface to the center of the first particle PTC1, or from about 10 nm below the surface to a depth of about 2 $\mu$m.

Because the first particle PTC1 may further include the grain boundary coating part (i.e., the grain boundary coating layer), the structural stability thereof may be reinforced, and a substantially uniform coating layer may be formed on the surface of the first particle PTC1. In other words, the grain boundary coating part/layer may facilitate the formation of a substantially uniform coating layer on the surface of the first particle PTC1. In addition, because the first particle PTC1 may further include the grain boundary coating part/layer, the electrical conductivity of the first particle PTC1 may be further improved.

In one or more embodiments, the first particle PTC1 may have a spherical shape in which first primary particles NNP1 having a nano size are agglomerated. Because the first primary particles are closely agglomerated in the first particle PTC1, properties may be shown as follows. In one or more embodiments, the first particle PTC1 may have a spherical shape or an elliptical shape. An average particle diameter of the first particles PTC1 may be about 2 micrometers ($\mu$m) to about 15 $\mu$m, about 3 $\mu$m to about 10 $\mu$m, or about 3 $\mu$m to about 7 $\mu$m. The average particle diameter of the first particles PTC1 may be greater than an average particle diameter of the second particles PTC2, which will be explained later. In one or more embodiments, the average particle diameter of the first particles PTC1 may be obtained by measuring diameters by randomly selecting about 30 first particles PTC1 in an electron microscope image of the positive electrode active materials, and taking the diameter (D50) of particles at an accumulated volume of about 50 vol% in a particle size distribution. In one or more embodiments, a porosity of the first particles PTC1 may be about 20% to about 40% or about 20% to about 30%. Here, porosity (n) may be defined as the pore volume (Vp) divided by the total volume (Vt) of particles, or

$$n = \frac{V_p}{V_t}$$

. Porosity (n) may be measured by Mercury Intrusion Porosimetry (MIP), gas adsorption methods such as BET analysis, or a combination of helium pycnometry and bulk density measurement.

A span value of the first particles PTC1 analyzed by a particle size analyzer may be about 0.3 to about 0.75. In particle size analysis, the span value is a value that indicates the width of the particle size distribution, or

$$\text{Span} = \frac{D_{90} - D_{10}}{D_{50}}.$$

A lower span value indicates a more uniform particle size distribution, meaning the particles are more consistent in size. Conversely, a higher span value suggests a wider range of particle sizes within the sample.

A size (i.e., an average size) of the first primary particles NNP1 of the first particle PTC1 may be about 10 nanometers (nm) to about 400 nm, about 20 nm to about 300 nm, about 100 nm to about 200 nm, or about 50 nm to about 200 nm.

The first particle PTC1 may include an olivine-based lithium compound represented by Chemical Formula 1.

**Chemical Formula 1** $\qquad$ $\text{Li}_{a1}\text{Mn}_{z1}\text{Fe}_{x1}\text{Ti}_{y1}\text{B}^1_{b1}\text{PO}_{4-c1}$

In Chemical Formula 1, $0.8 \leq a1 \leq 1.2$, $0.3 \leq z1 \leq 0.7$ (or $0.3 \leq z1 < 0.7$), $0.3 \leq x1 \leq 0.7$ (or $0.3 \leq x1 < 0.7$), $0.001 \leq y1 \leq 0.05$, $0 \leq b1 \leq 0.05$, $0 \leq c1 \leq 0.05$, and $x1 + y1 + z1 + b1 = 1$ may be satisfied. $B^1$ in Chemical Formula 1 may include (e.g., be) at least one element selected from among transition metals having an oxidation number of 3 or 4, and, in one or more embodiments, the transition metal having an oxidation number of 3 or 4 may be selected from among Ti, Mn, V, Zr, Nb, Mo, Nd, or other suitable transition metals.

Mn and Ti may be dopants doped in the first particle PTC1. A doping amount of Ti may be about 500 ppm to about 3,000 ppm or about 1,000 ppm to about 3,000 ppm. The Ti-doping may control the size of the first primary particles NNP1 uniformly (e.g., substantially uniformly) and thus may improve the charge and discharge efficiency, low-temperature properties, and lifetime characteristics of a rechargeable lithium battery. In addition, the Ti-doping may stabilize the crystal structure of the positive electrode active material and improve the lifetime characteristics of a rechargeable lithium battery.

A lithium iron phosphate-based positive electrode active material having an olivine crystal structure (hereinafter, referred to as LFP) has excellent or suitable lifetime characteristics but low energy density and defects of deteriorating lifetime characteristics if (e.g., when) using high voltage compared to other positive electrode active materials. A lithium manganese iron phosphate-based positive electrode active material in which a portion of Fe in LFP is substituted with Mn (hereinafter, referred to as LMFP) has high operating voltage and energy density but may induce manganese elution and cause excessive reduction of a crystal grain size compared to the LFP. If the particle size of the LMFP-based positive electrode active material is too small, the bonding force between a current collector and a positive electrode active material may be small, and an electrode plate processing may be difficult, and a large amount of a binder may be desired or required during forming an electrode plate.

In a commonly used LMFP, the molar ratio of Mn to Fe (Mn/Fe) may be about 1 or more, for example, about 1 to about 4. In contrast, the positive electrode active material according to one or more embodiments of the present disclosure may have Mn/Fe of about 0.1 to about 0.3, or about 0.15 to about 0.25. Because a small amount of Mn may be contained compared to the common LMFP, the positive electrode active material according to the present disclosure may have a greater crystal grain size, and thus the size of the first primary particles may increase. If (e.g., when) the manganese content (e.g., amount) satisfies the range, the high voltage lifetime characteristics of a LFP positive electrode active material may be improved, while the defects of manganese elution and difficulties in electrode plate processing may be avoided.

In one or more embodiments, the first particle PTC1 may further include carbon derived from the coating layer and/or grain boundary coating layer. A carbon element content (e.g., amount) in the first particle PTC1 may be about 0.5 wt% to about 10 wt%, about 1 wt% to about 3 wt%, about 1.5 wt% to about 2.5 wt%, or about 1.0 wt% to about 1.8 wt%, based on 100 wt% of a total weight of the first particle PTC1.

The positive electrode active material of disclosure may improve the mixture density, capacity, and energy density thereof by including the first particles PTC1. In one or more embodiments, a pellet density of the positive electrode active material of present disclosure may be about 2.0 grams/cubic centimeter (g/cc) to about 3.0 g/cc, or about 2.0 g/cc to about 2.5 g/cc, or about 2.3 g/cc to about 2.5 g/cc, or about 2.4 g/cc to about 2.6 g/cc, or about 2.5 g/cc to about 2.6 g/cc.

If (e.g., when) the first particles PTC1 are secondary particles, the average particle diameter thereof is large, and a relatively small amount of a binder BND may be desired or required to attach the first particles to the current collector COL1 (see FIG. 1). For example, in one or more embodiments, the content (e.g., amount) of the binder BND may be about 0.5 wt% to about 3 wt% on the basis of 100 wt% of a total weight of the positive electrode active material layer AML1. If (e.g., when) the content (e.g., amount) of the binder BND in the positive electrode active material layer AML1 is reduced, the content (e.g., amount) of the active material may increase accordingly, and the capacity and energy density of the rechargeable lithium battery may be thus improved. In addition, by reducing the content (e.g., amount) of the binder, thereby reducing resistance, the electrical conductivity of the positive electrode may be improved.

**Second Particle PTC2**

The second particle PTC2 may have (e.g., be in) a polycrystal form and may include a secondary particle in which at least two or more second primary particles NNP2 are agglomerated. For example, one second particle PTC2 may include a plurality of second primary particles NNP2 agglomerated with each other. The second particle PTC2 may have a spherical shape or an elliptical shape.

In one or more embodiments, the second particle PTC2 may include a coating layer on the surface thereof. The coating layer may cover the entire surface (e.g., entire outermost surface) of the second particle PTC2 or may cover a portion of the surface of the second particle PTC2. The second particle PTC2 may comprise a coating layer containing a carbon element. The coating layer may include carbon simple substance and/or a carbon-containing compound. The second particle PTC2 may have improved structural stability and electrical conductivity due to the coating layer.

In one or more embodiments, the coating layer may further include at least one selected from the group consisting of a titanium-containing compound, a magnesium-containing compound, and a vanadium-containing compound, as a metal-containing compound. A metal-containing compound such as the titanium-containing compound, the magnesium-containing compound and the vanadium-containing compound may be, for example, a metal oxide, a metal hydroxide, a metal carbonate, a synthesized compound thereof or a (e.g., any suitable) mixture thereof. The metal-containing compound may further include other metal or non-metal elements. For example, in one or more embodiments, the metal-containing compound may further include lithium.

In one or more embodiments, the second particle PTC2 may further include a grain boundary coating layer on the surface of each of the second primary particles NNP2. The grain boundary coating layer may be present in the second particle PTC2. The grain boundary coating layer may be formed along the interface between the second primary particles NNP2 inside the second particle PTC2. For example, the grain boundary coating layer may refer to a material coated on a grain boundary in the second particle PTC2. The grain boundary coating layer may include carbon and/or a carbon-containing compound. The grain boundary coating layer may further include at least one selected from the group consisting of a titanium-containing compound, a magnesium-containing compound, and a vanadium-containing compound.

An interior of the above-described second particle PTC2 may refer to the entire interior of the second particle PTC2 excluding the surface (e.g., outermost surface) of the second particle PTC2. For example, the interior of the second particle PTC2 may refer to an entire interior from a depth of about 10 nm from the surface of the second particle PTC2 to a center of the second particle PTC2, or a region from a depth of about 10 nm from the surface of the second particle PTC2 to a depth of about 2 $\mu$m from the surface of the second particle PTC2.

Because the second particle PTC2 may further include the grain boundary coating part (i.e., the grain boundary coating layer), the structural stability thereof may be reinforced, and a substantially uniform coating layer may be formed on the surface of the second particle PTC2. In other words, the grain boundary coating layer may facilitate the formation of a substantially uniform coating layer on the surface of the second particle PTC2. In addition, because the second particle PTC2 may further include the grain boundary coating part/layer, the electrical conductivity of the second particle PTC2 may be further improved.

In one or more embodiments, the second particle PTC2 may have a spherical shape in which second primary particles NNP2 having a nano size are agglomerated. Because the second primary particles NNP2 are closely agglomerated in the second particle PTC2, properties may be shown as follows. In one or more embodiments, the second particle PTC2 may have a spherical shape or an elliptical shape. An average particle diameter of the second particles PTC2 may be about 2 $\mu$m to about 15 $\mu$m, about 3 $\mu$m to about 10 $\mu$m, about 5 $\mu$m to about 10 $\mu$m, about 3 $\mu$m to about 7 $\mu$m, or about 2 $\mu$m to about 5 $\mu$m. The average particle diameter of the second particles PTC2 may be smaller than the average particle diameter of the first particles PTC1 described above. In one or more embodiments, the average particle diameter of the second particles PTC2 may be obtained by measuring diameters by randomly selecting about 30 second particles PTC2 in an electron microscope image of the positive electrode active material, and taking the diameter (D50) of particles at an accumulated volume of about 50 vol% in a particle size distribution. In one or more embodiments, the average particle diameter (D50) of the second particles PTC2 may be about 2 $\mu$m to about 5 $\mu$m. A porosity of the second particles PTC2 may be about 20% to about 40% or about 20% to about 30%. A span value of the second particles PTC2 analyzed by a particle size analyzer may be about 0.3 to about 0.75.

A size of the second primary particles NNP2 of the second particle PTC2 may be about 100 nm to about 500 nm, about 10 nm to about 400 nm, about 20 nm to about 300 nm, or about 50 nm to about 200 nm.

The second particle PTC2 may include an olivine-based lithium compound represented by Chemical Formula 2.

**Chemical Formula 2** $\qquad$ $Li_{a2}Ni_{z2}Mn_{x2}C^1_{y2}O_{c2}$

In Chemical Formula 2, $1 \leq a2 \leq 1.5$, $0.3 \leq z2 \leq 0.7$ (or $0.3 \leq z2 < 0.7$), $0.3 \leq x2 \leq 0.7$ (or $0.3 \leq x2 < 0.7$), $0.001 \leq y2 \leq 0.1$ (or $0 \leq y2 \leq 0.1$), $2 \leq c2 \leq 2.3$, and $z2 + x2 + y2 = 1$ may be satisfied. For example, in Chemical Formula 2, $1 \leq a2 \leq 1.5$, $0.3 \leq z2 \leq 0.7$, $0.3 \leq x2 \leq 0.7$, $0 \leq y2 \leq 0.1$, $2 \leq c2 \leq 2.3$, and $z2 + x2 + y2 = 1$ may be satisfied. For example, in Chemical Formula 2, $1 \leq a2 \leq 1.5$, $0.3 \leq z2 < 0.7$, $0.3 \leq x2 < 0.7$, $0.001 \leq y2 \leq 0.1$, $2 \leq c2 \leq 2.3$, and $z2 + x2 + y2 = 1$ may be satisfied. $C^1$ in Chemical Formula 2 may include (e.g., be) at least one element selected from among transition metals having an oxidation number of 3 or 4 and, in one or more embodiments, the transition metal having an oxidation number of 3 or 4 may be selected from among Ti, Mn, V, Zr, Nb, Mo, Nd, or other suitable transition metals.

A lithium-rich manganese-based oxide (LMR) containing excessive lithium has a mixed crystal structure of a layered phase ($LiMO_2$) and a rock salt phase ($Li_2MnO_3$). During charge and discharge processes, the rock salt phase is activated, and high capacity may be achieved by additionally developing capacity through an oxygen redox reaction.

In one or more embodiments, the second particle PTC2 may further include carbon element derived from the coating layer and/or grain boundary coating layer. A carbon element content (e.g., amount) in the second particle PTC2 may be about 0.5 wt% to about 10 wt%, about 1 wt% to about 3 wt%, about 1.5 wt% to about 2.5 wt%, or about 1.0 wt% to about 1.8 wt%, based on 100 wt% of a total weight of the second particle PTC2.

If (e.g., when) the second particles PTC2 are secondary particles, because an average particle diameter thereof is large, a relatively small amount of a binder BND may be desired or required to attach the second particles PTC2 to the current collector COL1 (see FIG. 1). For example, in one or more embodiments, a content (e.g., amount) of the binder BND may be about 0.5 wt% to about 3 wt% on the basis of 100 wt% of a total weight of the positive electrode active material layer AML1. If (e.g., when) the content (e.g., amount) of the binder BND in the positive electrode active material layer AML1 is reduced, the content (e.g., amount) of the active material may increase accordingly, and the capacity and energy density of the rechargeable lithium battery may be accordingly improved. In addition, by reducing the content (e.g., amount) of the binder, thereby reducing resistance, the electrical conductivity of the positive electrode may be improved.

The positive electrode active material according to one or more embodiments of the present disclosure will be explained in more detail with reference to FIG. 6 again. The positive electrode active material of present disclosure includes first particles PTC1 and second particles PTC2. The content (e.g., amount) of the first particles PTC1 in the positive electrode active material of present disclosure is about 80 wt% to about 97.5 wt% on the basis of 100 wt% of the sum of the content (e.g., amount) of the first particles PTC1 and the content (e.g., amount) of the second particles PTC2. For example, in one or more embodiments, the content (e.g., amount) of the first particles PTC1 may be about 85 wt% to about 95 wt%, about 90 wt% to about 95 wt%, or about 90 wt% to about 92.5 wt% on the basis of 100 wt% of the sum of the content (e.g., amount) of the first particles PTC1 and the content (e.g., amount) of the second particles PTC2.

In one or more embodiments, a mixing ratio of the first particles PTC1 to the second particles PTC2 may be controlled or selected such that an Mn content (e.g., amount) (e.g., total Mn amount) in a total content (e.g., amount) of 100 at% (atomic percentage) of metal elements excluding lithium in the positive electrode active material may be about 20 at% to about 50 at%.

A rechargeable lithium battery including the positive electrode active material of the present disclosure may maintain initial charge and discharge efficiency appropriately or suitably. The initial charge and discharge efficiency of the rechargeable lithium battery is a value obtained by dividing a discharge amount measured after charging and discharging once immediately after fabricating the rechargeable lithium battery by a charge amount. If (e.g., when) the initial charge and discharge efficiency is high, it refers to that the energy density of a rechargeable lithium battery is high. However, if (e.g., when) a rechargeable lithium battery is charged immediately after fabricating the same, the initial charge and discharge efficiency may decrease due to the formation of an oxide coating film on an electrode. For example, if (e.g., when) the initial charge and discharge efficiency is too high, the lifetime of electrolyte and electrode may be reduced due to insufficient formation of an oxide coating film on an electrode. In one or more embodiments, the initial charge and discharge efficiency of the rechargeable lithium battery of the present disclosure may be about 85% to about 95%, or about 90% to about 93%. If (e.g., when) the initial charge and discharge efficiency of the rechargeable lithium battery satisfies the range, relatively high energy density may be exhibited and maintained at the same time, an oxide coating film sufficient for an electrode may be provided, thereby improving the lifetime of an electrolyte and an electrode.

The rechargeable lithium battery including the positive electrode active material of the present disclosure may have improved low-temperature properties. In one or more embodiments, the capacity at about -20 °C with respect to the initial capacity (capacity at about -20 °C/initial capacity) of the rechargeable lithium battery may be about 40% or more. For example, in one or more embodiments, the capacity at about -20 °C with respect to the initial capacity (capacity at about -20 °C/initial capacity) of the rechargeable lithium battery may be about 60% to about 100%, about 70% to about 100%, or about 75% to about 99%. In the present disclosure, the term "initial capacity" refers to an initial capacity of a rechargeable lithium battery at room temperature.

The rechargeable lithium battery including the positive electrode active material of the present disclosure may exhibit improved average voltage. In one or more embodiments, an average operating voltage range of the rechargeable lithium battery of the present disclosure may be about 3.2 V to about 4.5 V. For example, in one or more embodiments, a range of an operating voltage may be about 3.5 V to about 3.7 V, or about 3.6 V to about 3.65 V.

The rechargeable lithium battery including the positive electrode active material of the present disclosure may exhibit improved lifetime characteristics. In one or more embodiments, the rechargeable lithium battery of the present disclosure may exhibit capacity retention after charging and discharging 50 times with a constant current of about 0.1 C at the above voltage of about 95% or more. For example, in one or more embodiments, the capacity retention may be about 98% to about 100%, or about 99% to about 100%.

The positive electrode active material of the present disclosure may improve the mixture pellet density and energy density thereof. In one or more embodiments, the pellet density of the positive electrode active material of the present disclosure may be about 2 g/cc to about 3 g/cc, or about 2.0 g/cc to about 2.5 g/cc, or about 2.5 g/cc to about 2.5 g/cc, or about 2.4 g/cc to about 2.6 g/cc, or about 2.5 g/cc to about 2.6 g/cc.

The rechargeable lithium battery including the positive electrode active material of the present disclosure may exhibit improved positive electrode utilization and energy density. The positive electrode utilization is a value obtained by dividing the capacity (mAh) of the rechargeable lithium battery by the mass (g) of the positive electrode active material contained in the rechargeable lithium battery. In one or more embodiments, the rechargeable lithium battery of the present disclosure may have the positive electrode utilization of about 135 mAh/g or more, about 140 mAh/g or more, or about 145 mAh/g or more. The rechargeable lithium battery of the present disclosure may have the positive electrode utilization of about 200 mAh/g or less.

The rechargeable lithium battery including the positive electrode active material of the present disclosure may improve capacity per volume and energy density thereof. The capacity per volume is the positive electrode utilization (mAh/g) of a rechargeable lithium battery multiplied by the density (g/cc) of the positive electrode active material contained in the rechargeable lithium battery. In one or more embodiments, the rechargeable lithium battery of the present disclosure may have the capacity per volume of about 300 mAh/cc or more, 350 mAh/cc or more, or 360 mAh/cc or more. The rechargeable lithium battery of the present disclosure may also have the capacity per volume of about 500 mAh/cc or less.

**Method for Preparing Positive Electrode Active Material**

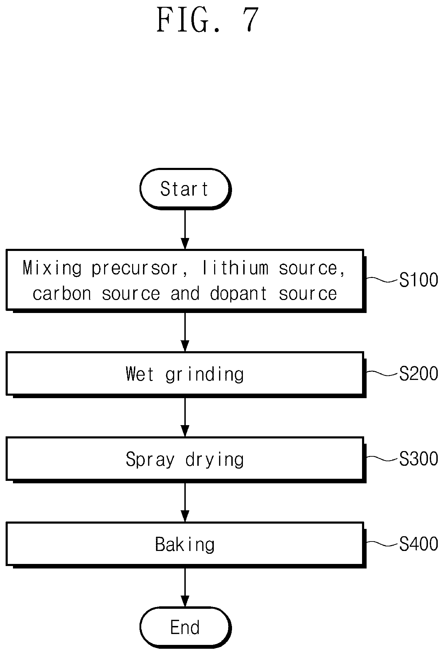

FIG. 7 is a flowchart for explaining a method for preparing a positive electrode active material according to one or more embodiments of the present disclosure. A method for preparing the first particles PTC1 according to one or more embodiments of the present disclosure will be explained in more detail with reference to FIG. 7.

A manganese iron phosphate precursor, a lithium source, a carbon source, and a dopant source may be added to a solvent and mixed (S100). For example, the solvent may be water, ethanol, and/or the like. The manganese iron phosphate precursor may be a compound containing manganese (Mn), iron (Fe), and phosphorus (P) simultaneously, a (e.g., any suitable) mixture of a compound containing manganese (Mn) and a compound containing iron (Fe) and phosphorus (P), or a (e.g., any suitable) mixture of a compound containing manganese (Mn), a compound containing iron (Fe), and a compound containing phosphorus (P). For example, in one or more embodiments, the manganese iron phosphate precursor may include: $Mn_xFe_{1-x}PO_4 \cdot H_2O$; a mixture of $MnCO_3$ and $FePO_4 \cdot H_2O$; and/or a (e.g., any suitable) mixture of $MnCO_3$, $FeSO_4$, and $H_3PO_4$. Here, x may be about 0.5 to about 0.9 (e.g., about 0.3 to about 0.7).

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The carbon source may include at least one selected from the group consisting of glucose, sucrose, fructose, cellulose, starch, citric acid, polyacrylic acid, polyethylene glycol, and dopamine.

The dopant source may include an oxide containing a dopant metal and/or a chloride containing a dopant metal. For example, in one or more embodiments, the dopant source may include at least one of an oxide of Mn or a chloride of Mn, and at least one of an oxide of Ti or a chloride of Ti, included in Chemical Formula 1. For example, in one or more embodiments, the dopant source may include at least one of an oxide of Mn or a chloride of Mn, and at least one of an oxide of Ti or a chloride of Ti.

The mixture may be subjected to wet grinding (S200). The wet grinding may be performed using a common wet mill capable of controlling temperature. For example, in one or more embodiments, the wet grinding may use at least one selected from the group consisting of a bead mill, a ball mill, an attrition mill, an apex mill, a super mill, and a basket mill. Through the wet grinding process, the particles in the mixture may be ground to a fine size.

In one or more embodiments of the present disclosure, the wet grinding (S200) may not be provided. For example, in one or more embodiments, to maximize or increase the average particle diameter of the first particles PTC1 to be finally prepared, the wet grinding (S200) with respect to precursor particles may not be provided.

A dried mixture may be formed by removing the solvent from the mixture (S300).

In the preparation of the first particles PTC1 shown in FIG. 6 according to one or more embodiments of the present disclosure, the formation of the dried mixture may include performing a direct evaporation method with respect to the mixture. For example, in one or more embodiments, the direct evaporation method may include static drying or spray drying.

In the preparation of the first particles PTC1 in FIG. 7 according to one or more embodiments of the present disclosure, the forming of the dried mixture may include performing spray drying of the mixture. The spray drying may use a generally used spray drying device. For example, the spray drying may use at least one selected from among an ultrasonic spray drying device, an air nozzle spray drying device, an ultrasonic nozzle spray drying device, a filter expansion droplet generation device, and a static spray drying device.

Fine particles in the size of the primary particles processed by the wet grinding process may be agglomerated with each other through the spray drying process to form secondary particles. Accordingly, by controlling a flow amount, a flow rate, a temperature, and a retention time in a reactor of a carrier gas, and internal pressure in the spray drying process, the primary particles may be formed into a secondary particle form with a desired or suitable size.

In one or more embodiments, the mixture that is a target for spray drying may have a total solid content (e.g., amount) of about 20% to about 40%. The total solid content (e.g., amount) may refer to a converted value to a percentage of the weight of solid materials (i.e., dried mixture) remain after evaporating the solvent on the basis of the total weight of the mixture (i.e., spray solution). In one or more embodiments, the spray solution may have the total solid content (e.g., amount) of about 30 wt%.

If (e.g., when) the total the solid content (e.g., amount) is less than about 20%, the average particle diameter of the first particles PTC1 may decrease, and defects of reducing productivity may occur. If (e.g., when) the total solid content (e.g., amount) is greater than about 40%, the control of the average particle diameter of the first particles PTC1 may become difficult, and the deviation in the size of the first particles PTC1 may increase.

The spray solution according to one or more embodiments of the present disclosure may have a viscosity of about 1500 mPa·s to about 2500 mPa·s at room temperature with the above-described total solid content (e.g., amount). For example, in one or more embodiments, the spray solution may have a viscosity of about 2000 mPa·s.

In one or more embodiments, an injection amount of the spray drying may be about 0.1 kg/min to about 0.9 kg/min. The injection amount of the spray drying may be defined as the weight of the total solid content (e.g., amount) in a spray solution injected per minute. For example, if about 1 kg a spray solution with the total solid content (e.g., amount) of about 20% is injected for about 1 minute, the injection amount may be about 0.2 kg/min. In one or more embodiments, the injection amount for the spry drying may be about 0.5 kg/min.

In one or more embodiments, the spray drying may be performed at a temperature of about 100 °C to about 300 °C. For example, the spray drying may be performed at a temperature of about 200 °C to about 300 °C, greater than about 200 °C to about 300 °C, or about 230 °C to about 270 °C. The spray gas (for example, air) used in the spray drying may be injected at a first temperature and exhausted at a second temperature. For example, the first temperature may be about 200 °C to about 250 °C. The second temperature may be about 80 °C to about 150 °C.

An injection pressure of the spray solution may be about 0.3 MPa to about 0.7 MPa. For example, in one or more embodiments, the injection pressure of the spray solution may be about 0.5 MPa.

If (e.g., when) the injection amount, injection pressure, and temperature of the spray drying satisfy the above-described ranges, the first particles PTC1 may have a spherical shape and a target porosity.

A flow rate of the spray solution in the spray drying may be about 30 mL/min to about 80 mL/min. If (e.g., when) the flow rate is less than about 30 mL/min, defects of nozzle blocking phenomenon and productivity reduction may occur. If (e.g., when) the flow rate is greater than about 80 mL/min, defects of incomplete drying of the mixture may occur due to moisture condensation in a spray drier. In one or more embodiments, the injection pressure of the spray solution may be about 0.3 MPa to about 0.7 MPa. For example, the injection pressure of the spray solution may be about 0.5 MPa.

The dried mixture may be then baked under an inert atmosphere (S400). The inert atmosphere may be a nitrogen atmosphere and/or an argon atmosphere. A temperature of the baking process may be about 500 °C to about 1000 °C or about 600 °C to about 800 °C. A performance time of the baking process may be about 4 hours to about 20 hours or about 6 hours to about 12 hours. Through the baking of the dried mixture, the first particles PTC1 including the compound of Chemical Formula 1 may be formed.

In one or more embodiments, the baked first particles PTC1 may be subjected to a dry grinding process. The baked mixture may be ground using an air jet mill and/or the like.

In the preparation of the first particles PTC1 in FIG. 7 according to one or more embodiments of the present disclosure, the baked mixture may be ground at a rotational speed of about 0 rpm to about 7000 rpm. For example, in one or more embodiments, the baked mixture may be ground at a rotational speed of about 4000 rpm to about 7000 rpm, about 4000 rpm to about 6000 rpm, or about 4500 rpm to about 5000 rpm. Accordingly, the grinding step (e.g., act or task) after the baking may be performed under relatively mild conditions. During preparing the positive electrode active material shown in FIG. 7, for example, in one or more embodiments, the dry grinding may not be provided. If (e.g., when) the rotational speed in the grinding step (e.g., act or task) satisfies the above-described range, the first particles PTC1 may be maintained to have the shape of secondary particles. Accordingly, the first particles PTC1 may have a secondary particle form (e.g., in a form of secondary particles) as shown in FIG. 6.

In the preparation method of the first particles PTC1 in FIG. 7 according to one or more embodiments of disclosure, a carbon source may be introduced to a manganese iron phosphate precursor to form a carbon coating layer uniformly (e.g., substantially uniformly) on the surface of the primary particles. Then, the primary particles may be closely agglomerated through subsequent spray drying to form dense secondary spherical particles. As a result, the first particles PTC1 may include stable carbon coating layers on the outside and inside of the first particles PTC1, and thus may have relatively high carbon content (e.g., amount). Due to the high carbon content (e.g., amount) of the first particles PTC1 prepared by the method of FIG. 7, the conductivity of the positive electrode active material layer AML1 may be improved.

The method for preparing the second particles PTC2 according to one or more embodiments of disclosure will be explained in more detail hereinafter. The second particle PTC2 containing a lithium-rich manganese-based oxide (hereinafter, referred to as LMR) may be prepared by mixing a transition metal precursor (e.g., nickel/manganese-based transition metal precursor) and a lithium source in a solvent to form a second mixture and then, baking.

The transition metal precursor may be in the form of a hydroxide, an oxide, or a carbonate. A transition metal precursor having a carbonate form may be used in consideration of preparing a positive electrode active material having a relatively high specific surface area.

The transition metal precursor may be prepared through a co-precipitation process. For example, the transition metal precursor may be prepared by dissolving each transition metal-containing raw material in a solvent to prepare a metal solution, mixing the metal solution, an ammonium cation complex forming agent, and an alkaline compound, and performing a co-precipitation reaction. In addition, an oxidizing agent or an oxygen gas may be additionally injected during the co-precipitation reaction.

In this regarding, the transition metal-containing raw material (i.e., transition metal precursor) may be an acetate, carbonate, nitrate, sulfate, halide, oxide, or sulfide of each transition metal. For example, the transition metal-containing raw material may be $NiO$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, $Mn_2O_3$, $MnO_2$, $Mn_3O_4$, $MnCO_3$, $Mn(NO_3)_2$, $MnSO_4H_2O$, manganese acetate, manganese halide, and/or the like.

The ammonium cation complex forming agent may be at least one selected from the group consisting of $NH_4OH$, $(NH_4)_2SO_4$, $NH_4NO_3$, $NH_4Cl$, $CH_3COONH_4$, and $NH_4CO_3$.

The alkaline compound may be at least one selected from the group consisting of NaOH, $Na_2CO_3$, KOH, and $Ca(OH)_2$. According to the form of the alkaline compound used, the form of the precursor may change. For example, if (e.g., when) NaOH is used as the alkaline compound, a transition metal precursor in a hydroxide form may be obtained, and if (e.g., when) $Na_2CO_3$ is used as the alkaline compound, a transition metal precursor in a carbonate form may be obtained. In one or more embodiments, if (e.g., when) the alkaline compound is used together with an oxidizing agent, a transition metal precursor in an oxide form may be obtained.

The lithium source may be obtained by the same or similar method as the preparation method of the first particles PTC1.

The transition metal precursor and the lithium source may be mixed in amounts such that a molar ratio of the total transition metal (Ni+Mn):Li is about 1:1.05-1:2, about 1:1.1-1:1.8, or, about 1:1.3-1:1.8.

The mixture (i.e., the second mixture) of the transition metal precursor and the lithium source may be subjected to wet grinding. The wet grinding may be the same as or similar to that in the preparation method of the first particles PTC1 (S200).

By removing the solvent from the mixture (i.e., second mixture) of the transition metal precursor and the lithium source, a dried mixture may be formed. The drying may be the same as or similar to that in the preparation method of the first particles PTC1 (S300). In one or more embodiments, the second mixture (i.e., the mixture of the transition metal precursor, the lithium source, and the solvent) may have the similar fluid properties to that of the first mixture used in the preparation of the first particles PTC1, for example, may have a solid content of about 20 wt% to about 40 wt% based on 100 wt% of a total weight of the second mixture, and a viscosity of about 1500 mPa·s to about 2500 mPa·s at room temperature.

The mixture dried under an inert atmosphere may be baked. The baking may be the same as or similar to that in the preparation method of the first particles PTC1 (S400).

The first particles PTC1 and the second particles PTC2, respectively prepared by the above-described methods may be mixed to prepare the positive electrode active material according to one or more embodiments of the present disclosure. The mixing is conducted so that the content (e.g., amount) of the first particles PTC1 is about 80 wt% to about 97.5 wt% on the basis of the sum of 100 wt% of the content (e.g., amount) of the first particles PTC1 and the content (e.g., amount) of the second particles PTC2. For example, in one or more embodiments, the mixing may be conducted so that the content (e.g., amount) of the first particles PTC1 may be about 85 wt% to about 95 wt%, about 90 wt% to about 95 wt%, or about 90 wt% to about 92.5 wt% on the basis of the sum of 100 wt% of the content (e.g., amount) of the first particles PTC1 and the content (e.g., amount) of the second particles PTC2.

Carbon element analysis according to one or more embodiments of the present disclosure may be performed by an Elementar Micro Cube elemental analyzer. An example operation method and conditions thereof are as follows. About 1-2 mg of a sample was weighed in a tin cup, put in an automatic sampling tray, brought into a combustion tube via a ball valve, and burned at a combustion temperature of about 1000 °C. After that, the burned gas was reduced using reducing copper to form carbon dioxide. The carbon dioxide was detected using a thermal conductivity detector (TCD) detector.

In the method for measuring the carbon content (e.g., amount) according to one or more embodiments of the present disclosure, scanning electron microscopy-energy dispersive X-ray spectroscopy (SEM-EDS) may be performed with respect to the surface of the particles, and quantitative analysis may be performed. As the method for measuring the carbon content (e.g., amount), an inductively coupled plasma-mass spectrometry (ICP-MS), an inductively coupled plasma optical emission spectroscopy (ICP-OES), and/or the like may be used in addition to the SEM-EDS.

Hereinafter, the disclosure will be explained in more detail via Examples. However, the Examples are only for illustrations of the present disclosure, and the scope of the disclosure is not limited to the Examples.

**Preparation Example 1: Preparation of First Particles (LMFP) in Secondary Particle Form**

An iron phosphate precursor ($Mn_{0.6}Fe_{0.4}PO_4$), lithium carbonate, and titanium dioxide were mixed in a molar ratio of about 1:1.03:0.03 of (Mn+Fe), Li, and Ti. 12 wt% of glucose was added to the mixture. The mixture that was a slurry was evaporated and dried by spray drying with a spray pressure of about 0.5 MPa at temperature conditions of about 230 °C. The dried mixture was then baked under a nitrogen atmosphere at about 750 °C for about 10 hours to obtain first particles in a secondary particle form. The average size of the primary particles in the first particle was about 100 nm to about 200 nm.

**Preparation Example 2: Preparation of Second Particles (LMR) in Secondary Particle Form**

A $(Ni_{0.35}Mn_{0.65})(OH)_2$ transition metal precursor and $Li_2CO_3$ lithium source were mixed in a weight ratio of about 1:1.3 to form a slurry. The slurry was then dried by spray drying under temperature conditions of about 230 °C and a spray pressure of about 0.5 MPa. The spray dried mixture was subsequently baked under an oxygen atmosphere at about 600 °C for about 10 hours to prepare second particles in a secondary particle form. The average size of the second particles was about 5-10 $\mu$m, and the average size of the primary particles in the second particle was about 100 nm to about 500 nm.

**Preparation Example 3: Preparation of First Particles (LMFP) in Single Particle Form**

An iron phosphate precursor ($Mn_{0.6}Fe_{0.4}PO_4$), lithium carbonate, and titanium dioxide were mixed in a molar ratio of about 1:1.03:0.03. 12 wt% of glucose was added to the mixture. The mixture that was a slurry was evaporated and dried by spray drying at a spray pressure of about 0.5 MPa and temperature conditions of about 230 °C. The dried mixture was then baked under a nitrogen atmosphere at about 750 °C for about 10 hours to obtain first particles in a secondary particle form. The baked product was ground to obtain first particles in a single particle form. The average size of the primary particles in the first particle was about 100 nm to about 200 nm.

In other words, Preparation Example 1 described creating secondary particles (LMFP) by mixing $Mn_{0.6}Fe_{0.4}PO_4$, lithium carbonate, and titanium dioxide with glucose, then drying and baking the mixture to achieve primary particles sized 100-200 nm. These primary particles aggregated to form larger secondary particles. Preparation Example 2 involved mixing a transition metal precursor (($Ni_{0.35}Mn_{0.65}$)$(OH)_2$) with $Li_2CO_3$, baking the mixture to form secondary particles with primary particles sized 100-500 nm and an overall particle size of 5-10 $\mu$m. These secondary particles were larger due to the aggregation of the primary particles within these secondary particles. Preparation Example 3 followed a similar process to Preparation Example 1 but included grinding the baked product to obtain single particles with primary particles sized 100-200 nm, which did not aggregate into secondary particles.

**Example 1**

The first particles in a secondary particle form prepared in Preparation Example 1 and the second particles in a secondary particle form prepared in Preparation Example 2 were mixed in a mass ratio of about 97.5:2.5 to prepare a positive electrode active material.

**Example 2**

The first particles in a secondary particle form prepared in Preparation Example 1 and the second particles in a secondary particle form prepared in Preparation Example 2 were mixed in a mass ratio of about 95:5 to prepare a positive electrode active material.

**Example 3**

The first particles in a secondary particle form prepared in Preparation Example 1 and the second particles in a secondary particle form prepared in Preparation Example 2 were mixed in a mass ratio of about 92.5:7.5 to prepare a positive electrode active material.

**Example 4**

The first particles in a secondary particle form prepared in Preparation Example 1 and the second particles in a secondary particle form prepared in Preparation Example 2 were mixed in a mass ratio of about 90:10 to prepare a positive electrode active material.

**Example 5**

The first particles in a secondary particle form prepared in Preparation Example 1 and the second particles in a secondary particle form prepared in Preparation Example 2 were mixed in a mass ratio of about 85:15 to prepare a positive electrode active material.

**Example 6**

The first particles in a secondary particle form prepared in Preparation Example 1 and the second particles in a secondary particle form prepared in Preparation Example 2 were mixed in a mass ratio of about 80:20 to prepare a positive electrode active material.

**Comparative Example 1: Positive Active Material including First Particles in Single Particle Form**

The first particles in a single particle form prepared in Preparation Example 3 was prepared as a positive electrode active material.

**Comparative Example 2: Positive Active Material including First Particles in Secondary Particle Form**

The first particles in a secondary particle form prepared in Preparation Example 1 was prepared as a positive electrode active material.

**Comparative Example 3: Positive Active Material including Second Particles in Secondary Particle Form**

The second particles in a secondary particle form prepared in Preparation Example 2 was prepared as a positive electrode active material.

**Manufacture of Positive Electrode**

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied on an aluminium current collector, dried, and rolled to manufacture a positive electrode.

**Fabrication of Rechargeable Lithium Battery**

A 2032 type (kind) coin half-cell was formed using the positive electrode prepared and a lithium metal counter electrode as the counter electrode. A separator (thickness: about 16 $\mu$m) composed of a porous polyethylene (PE) film was arranged between the positive electrode and the lithium metal counter electrode, and an electrolyte was injected to fabricate a rechargeable lithium battery. As the electrolyte, an electrolyte solution obtained by mixing 1.3 M $LiPF_6$ with a mixture solvent of ethylene carbonate (EC), ethyl methyl carbonate (EMC), and dimethyl carbonate (DMC) in a volume ratio of about 3:4:3 was used.

**Evaluation Example 1: Analysis on the Surface of Positive Electrode Active Material**

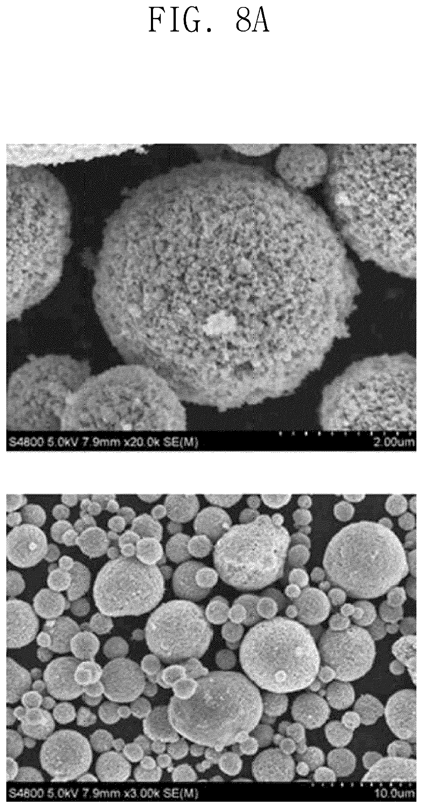

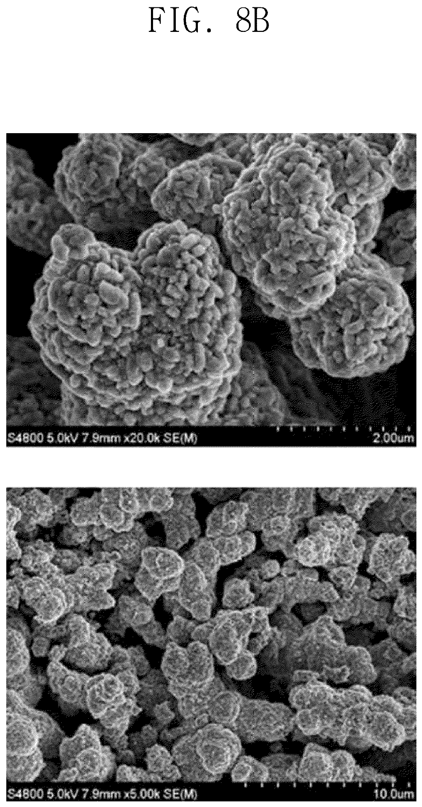

The scanning electron microscope (SEM) images of the positive electrode active material prepared in Preparation Example 1 are shown in FIG. 8A. The SEM images of the positive electrode active material in Preparation Example 2 are shown in FIG. 8B. Referring to FIG. 8A, it can be confirmed that the first particles according to one or more embodiments of the present disclosure have a spherical secondary particle form in which a plurality of primary particles are agglomerated. Referring to FIG. 8B, it can be confirmed that the second particles according to one or more embodiments of the present disclosure have a secondary particle form of a polycrystal in which a plurality of primary particles are agglomerated.

**Evaluation Example 2: Evaluation of Positive Electrode Active Material-Evaluation of Initial Charge and Discharge Efficiency**

Initial charge amounts and discharge amounts of each of the positive electrode active materials of Examples 1 to 6 and Comparative Examples 1 to 3 were measured, and initial charge and discharge efficiency was calculated. The results are shown in Table 1. The initial charge and discharge efficiency was calculated by dividing the discharge amount by the initial charge amount measured.

Table 1

| | Initial charge amount (mAh/g) | Initial discharge amount (mAh/g) | Initial charge and discharge efficiency (%) |
|---|---|---|---|
| Example 1 | 152.8 | 141.7 | 92.7 |
| Example 2 | 156.4 | 143.9 | 92 |
| Example 3 | 160.1 | 146.2 | 91.3 |
| Example 4 | 163.7 | 148.5 | 90.7 |
| Example 5 | 170.9 | 153 | 89.5 |
| Example 6 | 178.2 | 157.5 | 88.4 |

(continued)

|  | Initial charge amount (mAh/g) | Initial discharge amount (mAh/g) | Initial charge and discharge efficiency (%) |
|---|---|---|---|
| Comparative Example 1 | 146.1 | 136.2 | 93.2 |
| Comparative Example 2 | 149.2 | 139.4 | 93.4 |
| Comparative Example 3 | 294 | 230 | 78.3 |

Referring to Table 1, it can be confirmed that the positive electrode active materials according to Examples 1 to 6 of disclosure each have high initial charge and discharge efficiency and high energy density compared to the positive electrode active material of Comparative Example 3. In addition, it can be confirmed that Examples 1 to 6 of disclosure each have initial charge and discharge efficiency of about 93% or less and may form an oxide coating film with an appropriate or suitable level.

**Evaluation Example 3: Evaluation of Positive Electrode Active Material-Evaluation of Low-Temperature Properties**

The initial discharge amounts at room temperature and discharge amounts at about -20 °C were measured for each of the positive electrode active materials of Examples 1 to 6 and Comparative Examples 1 to 3, and discharge efficiency at a low temperature was calculated. The results are shown in Table 2. The discharge efficiency at a low temperature was calculated by dividing the discharge amount measured at about -20 °C by the discharge amount measured at room temperature.

Table 2

|  | Discharge amount at room temperature (mAh/g) | Discharge amount at -20 °C (mAh/g) | Discharge efficiency at low temperature (%) |
|---|---|---|---|
| Example 1 | 141.7 | 125 | 88.2% |
| Example 2 | 143.9 | 121 | 84.1% |
| Example 3 | 146.2 | 115 | 78.7% |
| Example 4 | 148.5 | 112 | 75.4% |
| Example 5 | 153 | 105 | 68.6% |
| Example 6 | 157.5 | 100 | 63.5% |
| Comparative Example 1 | 136.2 | 96 | 70.5% |
| Comparative Example 2 | 139.4 | 126 | 90.4% |
| Comparative Example 3 | 230 | 60 | 26.1% |

Referring to Table 2, it can be confirmed that of the positive electrode active materials according to Examples 1 to 6 of the present disclosure each have high discharge efficiency at a low temperature compared to the positive electrode active material of Comparative Example 3. For example, it can be confirmed that of the positive electrode active materials according to Examples 1 to 4 each have the discharge efficiency at a low temperature of about 75% or more.

**Evaluation Example 4: Evaluation of Positive Electrode Active Material**

The average voltage (V), capacity retention (%, @50cy), pellet density (PD), and energy density (positive electrode utilization and capacity per volume) of each of the positive electrode active materials of Examples 1 to 6 and Comparative Examples 1 to 3 were measured, and the results are shown in Table 3. The average voltage was obtained by integrating an area under a discharge voltage curve (a-voltage-capacity graph) after the initial charging and discharging of the cells and then dividing the integral by discharge capacity.

Table 3

| | Average voltage (V) | Capacity retention (%, @50cy) | Pellet density (g/cc) | Positive electrode utilization (mAh/g) | Capacity per volume (mAh/cc) |
|---|---|---|---|---|---|
| Example 1 | 3.6 | 99.8 | 2.45 | 139.8 | 343 |
| Example 2 | 3.6 | 99.8 | 2.49 | 143.1 | 356 |
| Example 3 | 3.6 | 99.7 | 2.53 | 146 | 369 |
| Example 4 | 3.61 | 99.5 | 2.55 | 145.7 | 372 |
| Example 5 | 3.62 | 99.5 | 2.57 | 143.2 | 368 |
| Example 6 | 3.62 | 99.5 | 2.59 | 140.2 | 363 |
| Comparative Example 1 | 3.6 | 99.1 | 2.35 | 133.7 | 314 |
| Comparative Example 2 | 3.6 | 99.8 | 2.41 | 136.5 | 329 |
| Comparative Example 3 | 3.65 | 98 | 2.81 | 205 | 576 |

Referring to Table 3, it can be confirmed that the positive electrode active materials according to Examples 1 to 6 each have higher energy density compared to the positive electrode active materials of Comparative Examples 1 and 2.

The positive electrode active material according to the present disclosure may include first particles and second particles, which are secondary particles having different compositions. Accordingly, the positive electrode active material layer may have increased electrical conductivity and increased mixture density (e.g., pellet density), and the content (e.g., amount) of the binder of the positive electrode active material layer may be reduced. The rechargeable lithium battery according to the present disclosure may have a relatively high operating voltage and improved low-temperature properties, and may solve or alleviate the defect of Mn elution.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the present disclosure have been described, it is understood that the present disclosure should not be limited to these example embodiments but one or more suitable changes and modifications may be made by one ordinary skilled in the art within the scope of the present disclosure as hereinafter claimed and equivalents thereof.

Embodiments are set out in the following clauses:

Clause 1. A method for preparing a positive electrode active material, the method comprising:

preparing first particles having a first average particle diameter;
preparing second particles having a second average particle diameter; and
mixing the first particles and the second particles so that an amount of the first particles is about 80 wt% to about 97.5 wt% on the basis of 100 wt% of a sum of the amount of the first particles and an amount of the second particles,
wherein the preparing of the first particles comprises:

adding a manganese iron phosphate precursor, a lithium source, a carbon source, and a dopant source to a solvent and mixing to form a first mixture;
drying the first mixture by spray drying; and
baking the dried first mixture, and
the preparing of the second particles comprises:

mixing a transition metal precursor and a lithium source to form a second mixture;
drying the second mixture by spray drying; and
baking the dried second mixture.

Clause 2. The method of clause 1, wherein the amount of the first particles is about 90 wt% to about 95 wt% on the basis of about 100 wt% of the sum of the amount of the first particles and the amount of the second particles.

Clause 3. The method or clause 1 or clause 2, wherein a mixing ratio of the first particles to the second particles is selected such that an Mn amount relative to a total amount of metal elements excluding lithium in the positive electrode active material is about 20 at% to about 50 at%.

Clause 4. **The** method of any one of clauses 1 to 3, wherein the spray drying in the preparing of the first particles comprises agglomerating particles in the first mixture to form secondary particles.

Clause 5. **The** method of any one of clauses 1 to 4, wherein the spray drying in the preparing of the second particles comprises agglomerating particles in the second mixture to form secondary particles.

Clause 6. **The** method of any one of clauses 1 to 5, wherein the first mixture, which is utilized as a spray solution of the spray drying, has a solid content of about 20 wt% to about 40 wt% based on 100 wt% of a total weight of the first mixture, and a viscosity of about 1500 mPa·s to about 2500 mPa·s.

Clause 7. The method of any one of clauses 1 to 6, wherein the second mixture, which is utilized as a spray solution of the spray drying, has a solid content of about 20 wt% to about 40 wt% based on 100 wt% of a total weight of the second mixture, and a viscosity of about 1500 mPa·s to about 2500 mPa·s.

**Claims**

1. A positive electrode active material, comprising:

   a plurality of first particles each comprising a compound represented by Chemical Formula 1 and having a first average particle diameter; and
   a plurality of second particles each comprising a compound represented by Chemical Formula 2 and having a second average particle diameter,
   wherein an amount of the first particles is about 80 wt% to about 97.5 wt% on the basis of 100 wt% of a sum of the amount of the first particles and an amount of the second particles:

   Chemical Formula 1          $Li_{a1}Mn_{z1}Fe_{x1}Ti_{y1}B^1_{b1}PO_{4-c1}$,

   in Chemical Formula 1, $0.8 \leq a1 \leq 1.2$, $0.3 \leq z1 \leq 0.7$ (or $0.3 \leq z1 < 0.7$), $0.3 \leq x1 \leq 0.7$ (or $0.3 \leq x1 < 0.7$), $0.001 \leq y1 \leq 0.05$, $0 \leq b1 \leq 0.05$, $0 \leq c1 \leq 0.05$, and $x1 + y1 + z1 + b1 = 1$,

   Chemical Formula 2          $Li_{a2}Ni_{z2}Mn_{x2}C^1_{y2}O_{c2}$,

   in Chemical Formula 2, $1 \leq a2 \leq 1.5$, $0.3 \leq z2 \leq 0.7$ (or $0.3 \leq z2 < 0.7$), $0.3 \leq x2 \leq 0.7$ (or $0.3 \leq x2 < 0.7$), $0.001 \leq y2 \leq 0.1$ (or $0 \leq y2 \leq 0.1$), $2 \leq c2 \leq 2.3$, and $z2 + x2 + y2 = 1$, and
   each of $B^1$ in Chemical Formula 1 and $C^1$ in Chemical Formula 2 comprises at least one element selected from the group consisting of transition metals having an oxidation number of 3 or 4.

2. The positive electrode active material as claimed in claim 1, wherein the amount of the first particles is about 90 wt% to about 95 wt% on the basis of 100 wt% of the sum of the amount of the first particles and the amount of the second particles.

3. The positive electrode active material as claimed in claim 1 or claim 2,

   wherein the first particle comprises a plurality of first primary particles that are agglomerated with each other, and
   wherein the second particle comprises a plurality of second primary particles that are agglomerated with each other.

4. The positive electrode active material as claimed in claim 3, wherein an average size of the plurality of first primary particles is about 50 nm to about 200 nm.

5. The positive electrode active material as claimed in claim 3 or claim 4, wherein an average size of the plurality of second primary particles is about 50 nm to about 200 nm.

6. The positive electrode active material as claimed in any one of claims 1 to 5, wherein the second particles are in a polycrystal form.

7. The positive electrode active material as claimed in any one of claims 1 to 6, wherein a mixing ratio of the first particles to the second particles is selected such that an Mn amount relative to a total amount of metal elements excluding lithium in the positive electrode active material is about 20 at% to about 50 at%.

8. The positive electrode active material as claimed in any one of claims 1 to 7, wherein a doping amount of Ti in the first particle is about 1,000 ppm to about 3,000 ppm.

9. The positive electrode active material as claimed in any one of claims 1 to 8,

   wherein the first average particle diameter is about 3 $\mu$m to about 10 $\mu$m, and
   the second average particle diameter is about 5 $\mu$m to about 10 $\mu$m.

10. The positive electrode active material as claimed in any one of claims 1 to 9,

   wherein the first particle comprises a coating layer containing carbon, a carbon amount in the first particle is about 1.0 wt% to about 1.8 wt% based on 100 wt% of a total weight of the first particle, and

wherein the second particle comprises a coating layer containing carbon, a carbon amount in the second particle is about 1.0 wt% to about 1.8 wt% based on 100 wt% of a total weight of the second particle.

11. The positive electrode active material as claimed in any one of claims 1 to 10, wherein a span value of the first particles, analyzed by a particle size analyzer, is about 0.3 to about 0.75.

12. The positive electrode active material as claimed in any one of claims 1 to 11, wherein a span value of the second particles, analyzed by a particle size analyzer, is about 0.3 to about 0.75.

13. The positive electrode active material as claimed in any one of claims 1 to 12, wherein a porosity of the first particles is about 20% to about 30%.

14. The positive electrode active material as claimed in any one of claims 1 to 13, wherein a porosity of the second particles is about 20% to about 30%.

15. A method for preparing a positive electrode active material, the method comprising:

preparing first particles having a first average particle diameter;
preparing second particles having a second average particle diameter; and
mixing the first particles and the second particles so that an amount of the first particles is about 80 wt% to about 97.5 wt% on the basis of 100 wt% of a sum of the amount of the first particles and an amount of the second particles,
wherein the preparing of the first particles comprises:

adding a manganese iron phosphate precursor, a lithium source, a carbon source, and a dopant source to a solvent and mixing to form a first mixture;
drying the first mixture by spray drying; and
baking the dried first mixture, and
the preparing of the second particles comprises:

mixing a transition metal precursor and a lithium source to form a second mixture;
drying the second mixture by spray drying; and
baking the dried second mixture.

# FIG. 1

# FIG. 2

# FIG. 3

# FIG. 4

# FIG. 5

# FIG. 6

# FIG. 7

```
                    ┌─────────────┐
                    │    Start    │
                    └──────┬──────┘
                           │
                           ▼
     ┌──────────────────────────────────────┐
     │ Mixing precursor, lithium source,    │──S100
     │ carbon source and dopant source      │
     └───────────────────┬──────────────────┘
                         │
                         ▼
     ┌──────────────────────────────────────┐
     │           Wet grinding               │──S200
     └───────────────────┬──────────────────┘
                         │
                         ▼
     ┌──────────────────────────────────────┐
     │           Spray drying               │──S300
     └───────────────────┬──────────────────┘
                         │
                         ▼
     ┌──────────────────────────────────────┐
     │             Baking                   │──S400
     └───────────────────┬──────────────────┘
                         │
                         ▼
                  ┌─────────────┐
                  │     End     │
                  └─────────────┘
```

# FIG. 8A

# FIG. 8B

**EP 4 661 093 A1**

# EUROPEAN SEARCH REPORT

Application Number

EP 25 17 1695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/261175 A1 (XU XIAOFU [CN] ET AL) 17 August 2023 (2023-08-17) | 1-7,9-15 | INV. H01M4/131 |
| Y | * examples 2, 4 * ----- | 8 | H01M4/136 H01M4/1391 |
| Y | US 11 942 626 B1 (HUANG ROBERT BRIAN [US] ET AL) 26 March 2024 (2024-03-26) * column 3, lines 28-33 * ----- | 8 | H01M4/1397 H01M4/36 H01M4/58 |

TECHNICAL FIELDS SEARCHED (IPC)

H01M

The present search report has been drawn up for all claims

| Place of search | Date of completion of the search | Examiner |
|---|---|---|
| Munich | 10 October 2025 | Meini, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 17 1695

This annex lists the patent family members relating to the patent documents cited in  the above-mentioned European search report.
The members are as contained in the European Patent Office EDP file on
The European Patent Office is in no way liable for these particulars which are merely given for the purpose of information.

10-10-2025

| Patent document cited in search report | | Publication date | Patent family member(s) | | Publication date |
|---|---|---|---|---|---|
| US 2023261175 | A1 | 17-08-2023 | CN | 116601794 A | 15-08-2023 |
| | | | CN | 119153653 A | 17-12-2024 |
| | | | CN | 119297222 A | 10-01-2025 |
| | | | EP | 4224579 A1 | 09-08-2023 |
| | | | US | 2023261175 A1 | 17-08-2023 |
| | | | WO | 2023108352 A1 | 22-06-2023 |
| US 11942626 | B1 | 26-03-2024 | NONE | | |

EPO FORM P0459

For more details about this annex : see Official Journal of the European Patent Office, No. 12/82